# EUROPÄISCHE PATENTANMELDUNG

(11) **EP 4 841 542 A1**
(43) Veröffentlichungstag der Anmeldung: **18.11.2026**
(21) Anmeldenummer: 26177795.7
(22) Anmeldetag: 11.05.2026
(51) Int. Cl.: G06Q 20/32, H04M 1/72412, H04B 5/70, H04M 1/724

(54) **MOBILE VORRICHTUNG, SYSTEM UND VERFAHREN ZUM AUSFÜHREN EINER TRANSAKTION SOWIE ANWENDUNG ZUR AUSFÜHRUNG AUF EINER MOBILEN VORRICHTUNG**

(30) Priorität: 12.05.2025 DE 102025118138
(71) Anmelder: Giesecke+Devrient ePayments GmbH, 81677 München (DE)
(72) Erfinder: Minks, Andreas, 81677 München (DE)
(74) Vertreter: LKGLOBAL Partnerschaftsgesellschaft mbB

(57) **Zusammenfassung**

Die Erfindung betrifft eine mobile Vorrichtung (1) zum Ausführen einer Transaktion. Die mobile Vorrichtung (1) umfasst eine Verarbeitungseinheit (10) und eine Kommunikationsschnittstelle (12) zur Kommunikation (4) mit einem externen Datenträger (2). Die Verarbeitungseinheit (10) ist bei Ausführung einer Anwendung dazu ausgeführt, eine Information bezüglich der Kommunikationsschnittstelle (12) der mobilen Vorrichtung (1) zu erhalten und einen Hinweis für einen Benutzer der mobilen Vorrichtung (1) basierend auf der Information bezüglich der Kommunikationsschnittstelle (12) der mobilen Vorrichtung (1) zu erzeugen. Der Hinweis für den Benutzer umfasst eine Positionierungsinformation (5) zur Positionierung des externen Datenträgers (2) relativ zur mobilen Vorrichtung (1). Die Erfindung betrifft ferner ein System (100) und ein Verfahren zum Ausführen einer Transaktion, sowie eine Anwendung zur Ausführung auf einer mobilen Vorrichtung (1).

## Beschreibung

Die vorliegende Erfindung betrifft Transaktionsvorgänge an mobilen Transaktionsterminals. Insbesondere betrifft die Erfindung eine mobile Vorrichtung, ein System und ein Verfahren zum Ausführen einer Transaktion sowie eine Anwendung zur Ausführung auf einer mobilen Vorrichtung.

Transaktionsvorgänge an mobilen Transaktionsterminals umfassen Prozesse, bei denen zum Beispiel Zahlungen über mobile Geräte wie tragbare Kartenleseterminals, Mobiltelefone (Smartphones) oder Tablets abgewickelt werden. Dabei initiiert der Verkäufer den Zahlungsvorgang üblicherweise, indem er den zu zahlenden Betrag in das mobile Gerät eingibt. Der Kunde kann dann etwa mit einer Zahlungskarte wie einer Kreditkarte oder Debit-Karte kontaktlos bezahlen. Die erfassten Zahlungsdaten werden über sichere Kommunikationswege an einen Zahlungsdienstleister übermittelt, wobei der Zahlungsdienstleister die Transaktionsdaten überprüft und anschließend die Transaktion ggf. freigibt. Der Kunde kann dabei noch aufgefordert werden, die Zahlung zu bestätigen, z. B. durch Eingabe einer PIN. Nach erfolgreicher Autorisierung sendet der Zahlungsdienstleister eine Bestätigung an das mobile Gerät, welches dann die erfolgreiche Transaktion anzeigt. Derartige Transaktionsvorgänge sind vorteilhaft, da sie flexibel eingesetzt werden können. Beispielsweise kann eine Bedienung in einem Restaurant das mobile Gerät stets bei sich tragen, um somit die Bezahlvorgänge bei den einzelnen Kunden schnell und unkompliziert abzuwickeln. Die Transaktionsvorgänge erfordern den Aufbau einer Kommunikationsverbindung zur Datenübertragung zwischen der Zahlungskarte und dem mobilen Gerät. Diese Kommunikationsverbindung ist jedoch oft zu schwach oder wird zuweilen sogar unterbrochen, was dazu führt, dass der Transaktionsvorgang wiederholt werden muss. Dies kann für die am Transaktionsvorgang Beteiligten oftmals als störend empfunden werden.

Es ist eine Aufgabe der vorliegenden Erfindung, einen Transaktionsvorgang unter Verwendung einer mobilen Vorrichtung zu verbessern.

Diese Aufgabe wird durch den Gegenstand der unabhängigen Ansprüche gelöst. Weitere Merkmale der Erfindung ergeben sich aus den abhängigen Ansprüchen, der nachfolgenden Beschreibung sowie den Figuren.

Gemäß einem Aspekt ist eine mobile Vorrichtung zum Ausführen einer Transaktion vorgesehen. Die mobile Vorrichtung umfasst eine Verarbeitungseinheit zur Ausführung einer Anwendung sowie eine Kommunikationsschnittstelle zur Kommunikation mit einem externen Datenträger. Die Verarbeitungseinheit ist bei Ausführung der Anwendung dazu ausgeführt, eine Information bezüglich der Kommunikationsschnittstelle der mobilen Vorrichtung zu erhalten. Die Verarbeitungseinheit ist bei Ausführung der Anwendung dazu ausgeführt, einen Hinweis für einen Benutzer der mobilen Vorrichtung basierend auf der Information bezüglich der Kommunikationsschnittstelle der mobilen Vorrichtung zu erzeugen. Der Hinweis für den Benutzer umfasst eine Positionierungsinformation zur Positionierung des externen Datenträgers relativ zur mobilen Vorrichtung.

Mit der erfindungsgemäßen mobilen Vorrichtung ist es möglich, einen Hinweis an einen Benutzer der mobilen Vorrichtung auszugeben, sodass es den an der Transaktion beteiligten Personen ermöglicht wird, schnell und intuitiv zu erkennen, wie der mobile Datenträger, beispielsweise eine Zahlungskarte bzw. Chipkarte, in Bezug auf die mobile Vorrichtung, beispielsweise ein Mobiltelefon oder Tablet, positioniert werden sollte, damit eine möglichst stabile Kommunikationsverbindung, insbesondere eine hohe Energieübertragungsrate und/oder Datenübertragungsrate, zwischen der mobilen Vorrichtung und dem mobilen Datenträger erreicht werden kann.

Auf diese Weise kann der Benutzer der mobilen Vorrichtung, das heißt ein Verkäufer oder ein Kunde, schnell erkennen, wie der mobile Datenträger an die mobile Vorrichtung gehalten oder an diese angelegt werden sollte, um die Energieübertragungsrate und/oder Datenübertragungsrate zu maximieren. Dies fördert den Aufbau einer stabilen Kommunikationsverbindung zwischen dem mobilen Datenträger und der mobilen Vorrichtung, sodass der entsprechende Transaktionsvorgang zuverlässiger und ggf. auch schneller ausgeführt werden kann. Das Risiko eines störenden Abbruchs der Kommunikationsverbindung und damit des Transaktionsvorgangs kann damit effektiv reduziert oder sogar gänzlich beseitigt werden.

Als mobile Vorrichtung kann dabei zum Beispiel ein tragbares Zahlungsterminal, insbesondere ein tragbares Kartenleseterminal, ein Mobiltelefon, ein Tablet oder ein sonstiger tragbarer Computer vorgesehen sein, an dem Zahlungsinformationen zur Ausführung der Transaktion empfangen werden können.

Die Verarbeitungseinheit, beispielsweise ein Prozessor, der mobilen Vorrichtung kann zur Verarbeitung der für die Transaktion erforderlichen Informationen konfiguriert sein. Ebenso kann die Verarbeitungseinheit dazu ausgeführt sein, die Anwendung (sog. App oder Applet) sowie weitere Anwendungen (Apps oder Applets) auf der mobilen Vorrichtung auszuführen, welche die Durchführung des Transaktionsprozesses unterstützen können oder hierfür erforderlich sind. Darunter fallen zum Beispiel Bezahl-Apps oder dergleichen.

Die Kommunikationsstelle der mobilen Vorrichtung kann eine drahtlose Kommunikationsverbindung mit einer externen Vorrichtung, insbesondere mit dem externen Datenträger, herstellen, um Energie und/oder Daten über die Kommunikationsverbindung mit der externen Vorrichtung auszutauschen. Dabei kann vorgesehen sein, dass zunächst eine Energieübertragung von der mobilen Vorrichtung an den externen Datenträger über die Kommunikationsschnittstelle stattfindet, wobei elektrische Energie drahtlos von der mobilen Vorrichtung an den externen Datenträger übertragen werden kann. Dies kann die Erzeugung eines elektrischen Energiefeldes durch die mobile Vorrichtung umfassen und/oder ermöglicht einen anschließenden Datenaustausch zwischen der mobilen Vorrichtung und dem externen Datenträger, bei welchem zum Beispiel für die Transaktion erforderliche Daten zwischen der mobilen Vorrichtung und dem externen Datenträger ausgetauscht werden. Dabei können zum Beispiel an der mobilen Vorrichtung Zahlungsdaten über die Kommunikationsschnittstelle von dem externen Datenträger empfangen werden.

Bei dem externen Datenträger kann es sich zum Beispiel um einen kartenförmigen Datenträger, beispielsweise im ID-1-Format, handeln. Der externe Datenträger kann zum Beispiel eine Chipkarte, eine Zahlungskarte, wie eine Kreditkarte oder eine Debit-Karte, oder eine Smart Card sein, über welche Transaktionen ausgeführt werden können. Bei der Transaktion kann es sich zum Beispiel um eine Zahlungstransaktion handeln, bei welcher der externe Datenträger eines Kunden verwendet wird, um eine Zahlung mit Hilfe der mobilen Vorrichtung des Verkäufers vorzunehmen.

Die Verarbeitungseinheit ist bei Ausführung der Anwendung dazu ausgeführt, eine Information bezüglich der Kommunikationsschnittstelle der mobilen Vorrichtung zu erhalten. Dies kann bedeuten, dass eine oder mehrere die Kommunikationsschnittstelle betreffende Eigenschaften, beispielsweise eine Position, eine Lage, eine Anordnung, eine Beschaffenheit, eine Erstreckung und/oder eine Form der Kommunikationsschnittstelle ermittelt werden, um die Information bezüglich der Kommunikationsschnittstelle bereitzustellen.

Diese ermittelte Information bezüglich der Kommunikationsschnittstelle kann dann verwendet werden, um den Hinweis an den Benutzer der mobilen Vorrichtung zu erzeugen, der es dem Benutzer ermöglicht, zu erkennen, wie der mobile Datenträger relativ zu der mobilen Vorrichtung positioniert und/oder ausgerichtet werden sollte, damit die Kommunikationsverbindung zwischen dem mobilen Datenträger und der mobilen Vorrichtung möglichst stabil ist, das heißt eine Energieübertragung und/oder eine Datenübertragung zwischen der mobilen Vorrichtung und dem externen Datenträger möglichst groß ist.

Dazu umfasst der Hinweis für den Benutzer die Positionierungsinformation zur Positionierung des externen Datenträgers relativ zur mobilen Vorrichtung. Die Positionierungsinformation kann dem Benutzer über verschiedene Wege mitgeteilt werden, zum Beispiel visuell, akustisch oder haptisch. In einem Beispiel kann die Positionierungsinformation dem Benutzer über ein visuell an der mobilen Vorrichtung ausgegebenes Zeichen bzw. eine sichtbare Markierung mitgeteilt werden. Diese Markierung kann ein Hinweis für den Benutzer sein, den externen Datenträger in einer bestimmten Weise relativ zur mobilen Vorrichtung zu positionieren und/oder auszurichten.

Gemäß einer Ausführungsform weist die Information bezüglich der Kommunikationsschnittstelle der mobilen Vorrichtung eine Positionsinformation bezüglich der Kommunikationsschnittstelle innerhalb der mobilen Vorrichtung auf.

Dies kann bedeuten, dass die Information bezüglich der Kommunikationsschnittstelle eine Angabe eines Teilbereichs der mobilen Vorrichtung, in dem die Kommunikationsschnittstelle angeordnet ist, beinhaltet. Darüber hinaus kann die Information bezüglich der Kommunikationsschnittstelle eine Angabe über eine Ausrichtung oder Erstreckung der Kommunikationsschnittstelle innerhalb der mobilen Vorrichtung enthalten, sodass der basierend darauf erzeugte Hinweis bzw. die Positionierungsinformation dem Benutzer eine Angabe bereitstellen kann, die ersichtlich macht, in welchen Teilbereichen sich die Kommunikationsschnittstelle oder Teile davon erstrecken und wo folglich der externe Datenträger zu positionieren wäre, um eine möglichst stabile Kommunikationsverbindung herzustellen.

Gemäß einer Ausführungsform umfasst die Kommunikationsschnittstelle ein Antennenelement innerhalb der mobilen Vorrichtung, wobei die Information bezüglich der Kommunikationsschnittstelle der mobilen Vorrichtung eine Positionsinformation bezüglich des Antennenelements innerhalb der mobilen Vorrichtung aufweist.

Das Antennenelement kann eine Spule oder eine Leiterbahn umfassen, die sich innerhalb der Vorrichtung erstreckt und Teil der Kommunikationsschnittstelle ist. Dabei kann sich das Antennenelement lediglich innerhalb eines Teilabschnitts in der mobilen Vorrichtung erstrecken, was jedoch für den Benutzer der mobilen Vorrichtung verborgen ist, da das Antennenelement in einem Gehäuse der mobilen Vorrichtung vorgesehen sein kann. Die Ausführung der Anwendung durch die Verarbeitungseinheit kann nun die Positionsinformation bezüglich des Antennenelements ermitteln, um diese Positionsinformation dann zur Erzeugung des Hinweises für den Benutzer der mobilen Vorrichtung zu nutzen, wobei der Hinweis bzw. die in dem Hinweis enthaltene Positionierungsinformation dem Benutzer vorgibt, zum Beispiel durch eine visuelle Anzeige, wie der Benutzer den mobilen Datenträger in Bezug auf die mobile Vorrichtung positionieren und/oder auszurichten hat, damit die Kommunikationsverbindung zwischen mobiler Vorrichtung und externem Datenträger über das Antennenelement möglichst stabil ist.

Gemäß einer Ausführungsform ist die Kommunikationsschnittstelle eine Nahfeld (NFC oder Near Field Communication) -Kommunikationsschnittstelle.

Dies ermöglicht eine drahtlose oder kontaktlose Kurzstrecken-Datenübertragung zwischen der mobilen Vorrichtung und dem externen Datenträger mittels elektronmagnetischer Induktion, beispielsweise unter Verwendung des oben genannten Antennenelements, insbesondere der oben genannten Spule, der Kommunikationsschnittstelle. Es können jedoch auch andere drahtlose oder kontaktlose Übertragungstechnologien durch die Kommunikationsschnittstelle der mobilen Vorrichtung bereitgestellt werden, wobei wiederum eine Positionsinformation bezüglich eines entsprechenden Sende- und Empfangsmoduls der jeweiligen Übertragungstechnologie ermittelt wird, um den Hinweis an den Benutzer zu erzeugen, wie der Benutzer den externen Datenträger relativ zur mobilen Vorrichtung positionieren und/oder ausrichten sollte, um eine möglichst stabile Kommunikationsverbindung zu erhalten.

Gemäß einer Ausführungsform ist die Verarbeitungseinheit dazu ausgeführt, die Information bezüglich der Kommunikationsschnittstelle der mobilen Vorrichtung basierend auf einer in der Anwendung enthaltenen oder von der Anwendung abrufbaren Datenbank zu erhalten. Alternativ oder zusätzlich ist die Verarbeitungseinheit dazu ausgeführt, die Information bezüglich der Kommunikationsschnittstelle der mobilen Vorrichtung von einer externen Datenbank zu erhalten.

Die Anwendung kann beispielsweise eine Datenbank bezüglich einer Vielzahl von verschiedenen Typen von mobilen Vorrichtungen aufweisen, wobei die Datenbank für jeden Typ von mobiler Vorrichtung die Information bezüglich der Kommunikationsschnittstelle, insbesondere die Positionsinformation bezüglich der Kommunikationsschnittstelle des jeweiligen Typs von mobiler Vorrichtung, enthält. Die Anwendung kann zudem bei ihrer Ausführung auf der Verarbeitungseinheit der mobilen Vorrichtung eine Information über den Typ derjenigen mobilen Vorrichtung, auf der die Anwendung gerade ausgeführt wird, bestimmen. Durch Abgleich des bestimmten Typs mit der Datenbank bezüglich der Vielzahl von verschiedenen Typen von mobilen Vorrichtungen kann die Anwendung nun die Information bezüglich der Kommunikationsschnittstelle, insbesondere die Positionsinformation bezüglich der Kommunikationsschnittstelle, für den bestimmten Typs von mobiler Vorrichtung ermitteln, sodass anschließend basierend darauf der Hinweis für den Benutzer erzeugt werden kann, wie zuvor erläutert.

Alternativ oder zusätzlich kann vorgesehen sein, dass die Anwendung auf eine Datenbank bezüglich einer Vielzahl von verschiedenen Typen von mobilen Vorrichtungen zugreifen kann, wobei die Datenbank auf der mobilen Vorrichtung selbst gespeichert ist.

Alternativ oder zusätzlich kann die Anwendung bei Ausführung auf der Verarbeitungseinheit die Information bezüglich der Kommunikationsschnittstelle der mobilen Vorrichtung, insbesondere die Positionsinformation bezüglich der Kommunikationsschnittstelle, von einer externen Datenbank beziehen. Zum Beispiel kann eine zentral auf einem entfernten Server gespeicherte Datenbank verwendet werden, in der eine Vielzahl von verschiedenen Typen von mobilen Vorrichtungen enthalten ist, wobei die Datenbank für jeden Typ von mobiler Vorrichtung die Information bezüglich der Kommunikationsschnittstelle, insbesondere die Positionsinformation bezüglich der Kommunikationsschnittstelle des jeweiligen Typs von mobiler Vorrichtung, aufweist. Die Information bezüglich der Kommunikationsschnittstelle kann dann über das Internet von der externen Datenbank an die mobile Vorrichtung übertragen werden.

Gemäß einer Ausführungsform umfasst die mobile Vorrichtung eine Vielzahl von Teilbereichen, die jeweils einen Teilabschnitt der mobilen Vorrichtung definieren, wobei die Positionierungsinformation einen ersten Teilbereich der Vielzahl von Teilbereichen der mobilen Vorrichtung angibt, an dem die Kommunikationsschnittstelle bei einer Kommunikation mit dem externen Datenträger eine größere Energieübertragungsrate und/oder Datenübertragungsrate aufweist als an einem weiteren Teilbereich der Vielzahl von Teilbereichen der mobilen Vorrichtung.

Mit anderen Worten kann die größte und damit zuverlässigste Energieübertragungsrate bzw. Datenübertragungsrate dann erreicht werden, wenn der externe Datenträger nahe an demjenigen (ersten) Teilbereich der mobilen Vorrichtung positioniert wird, in dem sich auch die Kommunikationsschnittstelle befindet. Wird der externe Datenträger an anderen Teilbereichen der mobilen Vorrichtung positioniert, die weiter entfernt von dem ersten, die Kommunikationsschnittstelle enthaltenden Teilbereich angeordnet sind, wird die Energieübertragungsrate bzw. Datenübertragungsrate dagegen eher geringer sein als am ersten Teilbereich. Dies mag der größeren Entfernung zwischen Kommunikationsschnittstelle der mobilen Vorrichtung und externem Datenträger geschuldet sein, da ein Energiefeld der Kommunikationsschnittstelle mit größer werdender Entfernung abnimmt und daher eine geringere Energieübertragung zulässt. Ebenso können bei größeren Entfernungen Signalinterferenzen eine Rolle spielen, die zu einer Verringerung der Energieübertragungsrate bzw. Datenübertragungsrate führen können.

Gemäß einer Ausführungsform umfasst die mobile Vorrichtung eine Ausgabeeinheit, welche dazu ausgeführt ist, den Hinweis für den Benutzer der mobilen Vorrichtung auszugeben.

Die Ausgabeeinheit kann insbesondere dazu ausgeführt sein, den Hinweis für den Benutzer der mobilen Vorrichtung in Form einer visuellen, akustischen und/oder haptischen Ausgabe bereitzustellen.

Eine visuelle Ausgabe kann zum Beispiel durch optisch wahrnehmbare Elemente an der mobilen Vorrichtung bereitgestellt werden. Dabei kann der Hinweis bzw. die Positionierungsinformation als ein Zeichen oder eine Markierung auf einem Bildschirm oder Display der mobilen Vorrichtung bereitgestellt werden.

Eine akustische Ausgabe kann zum Beispiel durch hörbare Elemente wie Sprachausgaben an der mobilen Vorrichtung bereitgestellt werden. Dabei kann der Hinweis bzw. die Positionierungsinformation als eine Sprachanweisung von der mobilen Vorrichtung ausgegeben werden, die den Benutzer dazu auffordert, den externen Datenträger an einer bestimmten Stelle an der mobilen Vorrichtung zu positionieren.

Eine haptische Ausgabe kann zum Beispiel durch fühlbare Elemente an der mobilen Vorrichtung bereitgestellt werden. Dabei kann der Hinweis bzw. die Positionierungsinformation als eine Vibration eines bestimmten Teilbereichs der mobilen Vorrichtung bereitgestellt werden, wobei der Benutzer anhand der Stärke der Vibration ausmachen kann, wo der externe Datenträger zu positionieren ist.

Gemäß einer Ausführungsform umfasst die Ausgabeeinheit eine Anzeige, welche dazu ausgeführt ist, den Hinweis für den Benutzer visuell auszugeben.

Die Anzeige kann ein Display oder ein Bildschirm der mobilen Vorrichtung sein. Für den Fall, dass die mobile Vorrichtung ein Mobiltelefon oder ein Tablet ist, kann der Hinweis für den Benutzer über das Display des Mobiltelefons bzw. Tablets ausgegeben werden.

Gemäß einer Ausführungsform ist die Anzeige dazu ausgeführt, die Positionierungsinformation in Form einer Markierung in einem Teilbereich der Anzeige für den Benutzer visuell auszugeben.

Die Markierung kann ein Zeichen oder einen Text beinhalten. Beispielsweise kann ein WLAN-Symbol die Positionierungsinformation darstellen. Die Markierung kann dabei in demjenigen Teilbereich auf der Anzeige der mobilen Vorrichtung angezeigt werden, wo sich auch die Kommunikationsschnittstelle befindet. Befindet sich beispielsweise die Kommunikationsschnittstelle hinter einem oberen Teil des Displays der mobilen Vorrichtung, so wird die Markierung auch auf dem oberen Teil des Displays angezeigt. So erkennt der Benutzer der mobilen Vorrichtung schnell, wo der externe Datenträger zu positionieren ist, um eine stabile Kommunikationsverbindung zwischen dem externen Datenträger und der mobilen Vorrichtung herzustellen.

Gemäß einer Ausführungsform bildet die Positionierungsinformation eine Position und/oder Erstreckung eines Antennenelements, insbesondere einer Leiterbahn des Antennenelements, innerhalb der mobilen Vorrichtung auf der Anzeige nach.

Dabei kann zum Beispiel eine Abbildung des Antennenelements oder der Leiterbahn auf der Anzeige der mobilen Vorrichtung angezeigt werden, wobei die Abbildung des Antennenelements oder der Leiterbahn eine 1:1-Abbildung darstellen kann. Dies kann bedeuten, dass der Benutzer die Abbildung des Antennenelements oder der Leiterbahn auf der Anzeige wahrnimmt, als ob sich das Antennenelement oder die Leiterbahn direkt hinter der Anzeige befindet. Es können hierfür zusätzlich auch dreidimensionale Effekte für die Abbildung eingesetzt werden. Dies fördert weiter das Verständnis des Benutzers darüber, wo der externe Datenträger zu positionieren ist, um eine stabile Kommunikationsverbindung zwischen dem externen Datenträger und der mobilen Vorrichtung herzustellen.

Gemäß einer Ausführungsform umfasst die mobile Vorrichtung ferner eine Erfassungseinheit zur Erfassung einer Umgebung der mobilen Vorrichtung, wobei die Verarbeitungseinheit bei Ausführung der Anwendung dazu ausgeführt ist, den Hinweis für den Benutzer auf der Anzeige unter Verwendung der durch die Erfassungseinheit erfassten Umgebung der mobilen Vorrichtung zu erzeugen.

Die Erfassungseinheit kann zum Beispiel eine Kamera sein, welche ein Bild oder ein Video der Umgebung aufnehmen kann. Die Darstellung der durch die Erfassungseinheit erfassten Umgebung kann beispielsweise in einem Videomodus der Erfassungseinheit erfolgen, wobei die Umgebung auf der Anzeige in Echtzeit dargestellt werden kann. Wird nun der externe Datenträger vom Benutzer aus gesehen hinter der mobilen Vorrichtung, insbesondere einem Mobiltelefon, positioniert, so kann der externe Datenträger auf der Anzeige durch das Video für den Benutzer sichtbar gemacht werden. Auf der Anzeige kann ebenfalls die oben erläuterte Markierung angezeigt werden, so dass der Benutzer den externen Datenträger selbst dann präzise und möglichst nahe an der Kommunikationsschnittstelle positionieren kann, wenn dieser für den Benutzer durch die mobile Vorrichtung verdeckt ist, das heißt dieser sich hinter der mobilen Vorrichtung befindet.

Gemäß einer Ausführungsform umfasst die Ausgabeeinheit einen Lautsprecher, welcher dazu ausgeführt ist, den Hinweis für den Benutzer akustisch auszugeben.

Wie oben angedeutet, kann die Positionierungsinformation, wie der Benutzer den externen Datenträger relativ zur mobilen Vorrichtung positionieren sollte, über eine Sprachausgabe an den Benutzer bereitgestellt werden.

Gemäß einem Aspekt ist ein System zum Ausführen einer Transaktion vorgesehen. Das System umfasst die erfindungsgemäße mobile Vorrichtung, wie sie hierin beschrieben ist, sowie einen externen Datenträger. Die Verarbeitungseinheit ist bei Ausführung der Anwendung dazu ausgeführt, die Transaktion auszuführen, wenn der externe Datenträger relativ zur mobilen Vorrichtung gemäß der Positionierungsinformation positioniert ist.

Gemäß einem Aspekt ist ein Verfahren zum Ausführen einer Transaktion mittels einer mobilen Vorrichtung, insbesondere mittels der hierin beschriebenen erfindungsgemäßen mobilen Vorrichtung, vorgesehen. In einem Schritt des Verfahrens erfolgt ein Bereitstellen einer Anwendung, welche dazu konfiguriert ist, auf der mobilen Vorrichtung ausgeführt zu werden. In einem weiteren Schritt erfolgt ein Ausführen der Anwendung auf der mobilen Vorrichtung. In einem weiteren Schritt erfolgt ein Erhalten einer Information bezüglich einer Kommunikationsschnittstelle der mobilen Vorrichtung. In einem weiteren Schritt erfolgt ein Erzeugen eines Hinweises für einen Benutzer der mobilen Vorrichtung basierend auf der Information bezüglich der Kommunikationsschnittstelle der mobilen Vorrichtung, wobei der Hinweis für den Benutzer eine Positionierungsinformation zur Positionierung des externen Datenträgers relativ zur mobilen Vorrichtung umfasst. In einem weiteren Schritt erfolgt ein Ausgeben des Hinweises an den Benutzer der mobilen Vorrichtung. In einem weiteren Schritt erfolgt ein Positionieren des externen Datenträgers relativ zur mobilen Vorrichtung gemäß der Positionierungsinformation, um somit die Transaktion auszuführen.

Die Verfahrensschritte können in der angegebenen Reihenfolge ausgeführt werden.

Gemäß einem Aspekt ist eine Anwendung zur Ausführung auf einer mobilen Vorrichtung, insbesondere auf der hierin beschriebenen erfindungsgemäßen mobilen Vorrichtung, vorgesehen, wobei die Ausführung der Anwendung auf der mobilen Vorrichtung die mobile Vorrichtung veranlasst, eine Information bezüglich einer Kommunikationsschnittstelle der mobilen Vorrichtung zu erhalten und einen Hinweis für einen Benutzer der mobilen Vorrichtung basierend auf der Information bezüglich der Kommunikationsschnittstelle der mobilen Vorrichtung zu erzeugen, wobei der Hinweis für den Benutzer eine Positionierungsinformation zur Positionierung eines externen Datenträgers relativ zur mobilen Vorrichtung umfasst.

Ausführungsbeispiele der Erfindung werden nachfolgend anhand schematischer Zeichnungen näher erläutert.

Dabei zeigen:
- Fig. 1: eine mobile Vorrichtung in einem System zum Ausführen einer Transaktion.
- Fig. 2: eine andere mobile Vorrichtung in einem System zum Ausführen einer Transaktion.
- Fig. 3: eine mobile Vorrichtung mit einer Anzeige, auf der eine Positionierungsinformation angezeigt wird.
- Fig. 4: eine mobile Vorrichtung mit einer Kommunikationsschnittstelle, die in einem ersten Teilbereich der mobilen Vorrichtung angeordnet ist.
- Fig. 5: eine mobile Vorrichtung mit einer Kommunikationsschnittstelle, die in einem zweiten Teilbereich der mobilen Vorrichtung angeordnet ist.
- Fig. 6: eine mobile Vorrichtung mit einer Kommunikationsschnittstelle, die in einem dritten Teilbereich der mobilen Vorrichtung angeordnet ist.
- Fig. 7: eine mobile Vorrichtung und einen externen Datenträger, der an einem ersten Teilbereich der mobilen Vorrichtung positioniert werden soll.
- Fig. 8: eine mobile Vorrichtung und einen externen Datenträger, der an einem zweiten Teilbereich der mobilen Vorrichtung positioniert werden soll.
- Fig. 9: eine mobile Vorrichtung und einen externen Datenträger, der an einem dritten Teilbereich der mobilen Vorrichtung positioniert werden soll.
- Fig. 10: ein Flussdiagramm für ein Verfahren zum Ausführen einer Transaktion.

In den Figuren werden gleiche oder funktionsgleiche Elemente mit den gleichen Bezugszeichen versehen.

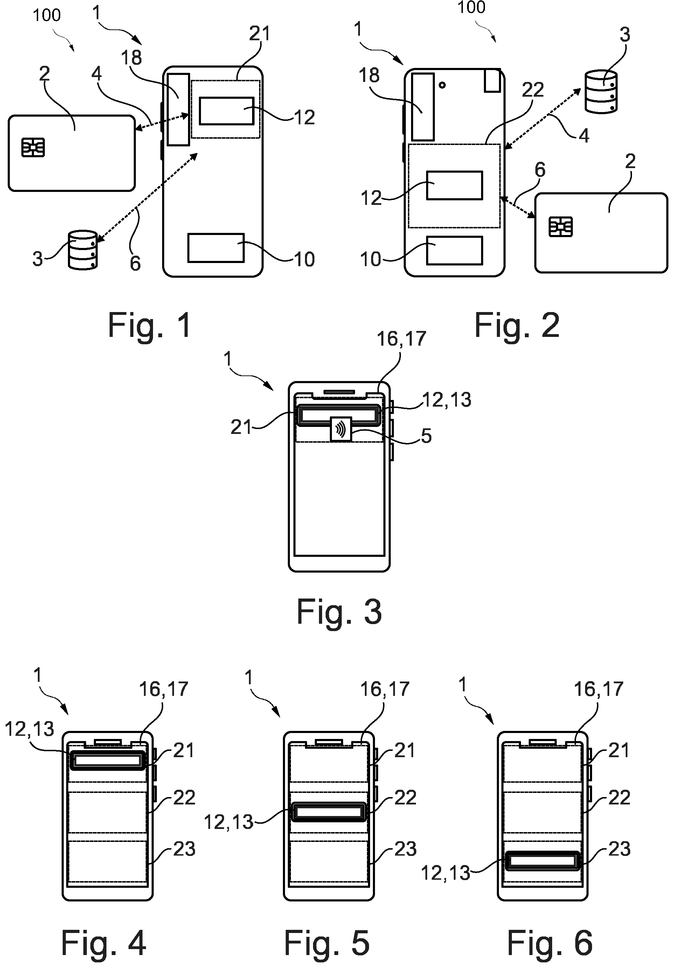

Fig. 1 zeigt eine mobile Vorrichtung 1 in einem System 100 zum Ausführen einer Transaktion. Das System 100 umfasst die mobile Vorrichtung 1, einen externen Datenträger 2 sowie optional eine externe Datenbank 3. Die mobile Vorrichtung 1 kann zum Beispiel eine durch einen Benutzer tragbare elektronische Vorrichtung wie ein Mobiltelefon (Smartphone), ein Tablet Computer oder ein tragbares Kartenlesegerät sein. Der externe Datenträger 2 ist zum Beispiel ein kartenförmiger Datenträger mit einem Chip und einer Kommunikationsschnittstelle zur Kommunikation 4 mit der mobilen Vorrichtung 1. Insbesondere kann der externe Datenträger 2 eine Chipkarte, eine Bezahlkarte, eine Kreditkarte, eine Debit-Karte oder eine sonstige Smart Card sein, die dazu ausgeführt ist, durch Zusammenwirken mit der mobilen Vorrichtung 1 eine Transaktion, beispielsweise eine Zahlungstransaktion, auszuführen.

Die mobile Vorrichtung 1 umfasst eine Verarbeitungseinheit 10, beispielsweise einen Prozessor, zur Ausführung einer Anwendung (App), sowie eine Kommunikationsschnittstelle 12 zur Kommunikation 4 mit dem externen Datenträger 2.

Die Kommunikationsschnittstelle 12 kann eine Nahfeld (NFC) - Kommunikationsschnittstelle sein, und kann ein Antennenelement, insbesondere eine Leiterbahn oder eine Spule umfassen, die sich in dem in Fig. 1 gezeigten Beispiel in einem ersten Teilbereich 21 der mobilen Vorrichtung 1 erstreckt. Der erste Teilbereich 21 befindet sich hier in einem oberen Teilabschnitt der mobilen Vorrichtung 1, beispielsweise neben einer Erfassungseinheit 18 der mobilen Vorrichtung 1. Die Erfassungseinheit 18 kann zum Beispiel eine Kamera sein, die dazu ausgeführt ist, eine Umgebung der mobilen Vorrichtung 1 zu erfassen und der Umgebung zugeordnete Bilddaten und/oder Videodaten zu erzeugen.

Die Verarbeitungseinheit 10 ist bei Ausführung der Anwendung dazu ausgeführt ist, eine Positionsinformation bezüglich der Kommunikationsschnittstelle 12, insbesondere des Antennenelements der Kommunikationsschnittstelle 12, zu erhalten. Diese Positionsinformation bezüglich der Kommunikationsschnittstelle 12 der mobilen Vorrichtung 1 kann von der Verarbeitungseinheit 10 basierend auf einer in der Anwendung enthaltenen Datenbank bezogen werden. In einem Beispiel erkennt die Anwendung nach Installation auf der mobilen Vorrichtung einen Typ der mobilen Vorrichtung 1 und kann für diesen Typ anschließend eine Positionsinformation bezüglich der Kommunikationsschnittstelle 12 aus der Datenbank abrufen und somit die Positionsinformation bezüglich der Kommunikationsschnittstelle 12 bereitstellen. Mit anderen Worten können die für die Ermittlung der Positionsinformation erforderlichen Daten in der Anwendung hinterlegt sein und je nach Typ von mobiler Vorrichtung 1, auf der die Anwendung installiert ist, eine für diesen Typ spezifische Positionsinformation bezüglich der Kommunikationsschnittstelle 12 aus der Datenbank abrufen.

Es ist aber auch möglich, dass die Positionsinformation bezüglich der Kommunikationsschnittstelle 12 direkt aus einem Speicher der mobilen Vorrichtung 1 abgerufen wird. Ebenso ist es möglich, dass die Verarbeitungseinheit 10 dazu ausgeführt ist, die Positionsinformation bezüglich der Kommunikationsschnittstelle 12 der mobilen Vorrichtung 1 von der externen Datenbank 3, beispielsweise einem externen (entfernten) Server, zu erhalten. Dazu kann die mobile Vorrichtung 1 eine Kommunikationsverbindung 6, beispielsweise eine Internetverbindung, mit der externen Datenbank 3 herstellen.

Die Verarbeitungseinheit 10 kann bei Ausführung der Anwendung dazu ausgeführt sein, einen Hinweis für einen Benutzer der mobilen Vorrichtung 1 basierend auf der Positionsinformation bezüglich der Kommunikationsschnittstelle 12 der mobilen Vorrichtung 1 zu erzeugen, wobei der Hinweis für den Benutzer eine Positionierungsinformation zur Positionierung des externen Datenträgers 2 relativ zur mobilen Vorrichtung 1 umfasst. Der Hinweis mit der Positionierungsinformation wird mit Bezug zur Fig. 3 genauer erläutert.

Fig. 2 zeigt eine andere (alternative) mobile Vorrichtung 1 in einem System 100 zum Ausführen einer Transaktion. Das System 100 sowie die mobile Vorrichtung 1 aus Fig. 2 entsprechen im Wesentlichen dem System 100 bzw. der mobilen Vorrichtung 1 aus Fig. 1, sodass hinsichtlich der Erläuterungen zu den einzelnen in Fig. 2 gezeigten Komponenten auf die Fig. 1 verwiesen werden kann. Im Unterschied zur Fig. 1 ist jedoch bei der mobilen Vorrichtung 1 aus Fig. 2 die Kommunikationsschnittstelle 12 in einem zweiten Teilbereich 22 der mobilen Vorrichtung 1 angeordnet, wobei sich der zweite Teilbereich 22 in einem mittleren Teilabschnitt der mobilen Vorrichtung 1 erstreckt.

Fig. 3 zeigt eine mobile Vorrichtung 1 mit einer Ausgabeeinheit 16 in Form einer Anzeige 17, auf der eine Positionierungsinformation 5 angezeigt wird. Die Positionierungsinformation 5 kann Teil des Hinweises für den Benutzer sein, der wie mit Bezug zur Fig. 1 beschrieben, basierend auf der Positionsinformation bezüglich der Kommunikationsschnittstelle 12 der mobilen Vorrichtung 1 erzeugt wird. Die Positionierungsinformation 5, hier in Form eines WLAN-Symbols dargestellt, kann dem Benutzer als ein Hinweis darauf dienen, dass die Kommunikationsschnittstelle 12, insbesondere das Antennenelement 13, in dem ersten Teilbereich 21, das heißt im oberen Teilabschnitt der mobilen Vorrichtung 1 (vgl. Fig. 1) angeordnet ist. Dieser Hinweis kann vom Benutzer dahingehend interpretiert werden, dass wenn der Benutzer den externen Datenträger 2 (vgl. Fig. 1) möglichst nahe an den ersten Teilbereich 21 positioniert, die Kommunikation 4 zwischen dem externen Datenträger 2 und der mobilen Vorrichtung 1 stabiler sein wird. Insbesondere kann durch Positionierung des externen Datenträgers 2 am ersten Teilbereich 21 der mobilen Vorrichtung 1 ein Abstand zwischen dem Antennenelement 13 der Kommunikationsschnittstelle 12 der mobilen Vorrichtung 1 und einer Kommunikationsschnittstelle des externen Datenträgers 2 derart verkürzt werden, dass eine Energieübertragungsrate und/oder eine Datenübertragungsrate zwischen dem externen Datenträger 2 und der mobilen Vorrichtung 1 höher ist, als wenn der Benutzer den externen Datenträger 2 an einem anderen Teilbereich der mobilen Vorrichtung 1 positionieren würde. Die Folge ist eine stabilere Kommunikationsverbindung 4 zwischen dem externen Datenträger 2 und der mobilen Vorrichtung 1, die weniger anfällig für Übertragungsunterbrechungen ist. Das Antennenelement 13 kann eine Leiterbahn oder Spule umfassen, was in Fig. 3 angedeutet ist.

Die Figuren 4 bis 6 zeigen drei verschiedene mobile Vorrichtungen 1, bei denen die Kommunikationsschnittstelle 12, insbesondere das Antennenelement 13, in unterschiedlichen Teilbereichen 21, 22, 23 der mobilen Vorrichtung 1 angeordnet ist.

Fig. 4 zeigt zum Beispiel eine mobile Vorrichtung 1, bei der die Kommunikationsschnittstelle 12, insbesondere das Antennenelement 13, in einem ersten Teilbereich 21 angeordnet ist, der sich an einem oberen Ende der mobilen Vorrichtung 1 befindet. Dieses Beispiel ist vergleichbar mit den in den Figuren 1 und 3 erläuterten Beispielen für die mobile Vorrichtung 1. Über die als Bildschirmanzeige 17 (Display) ausgeführte Ausgabeeinheit 16 der mobilen Vorrichtung 1 kann dem Benutzer der Hinweis mit der Positionierungsinformation so dargeboten werden, dass der Benutzer schnell und intuitiv erkennt, dass der externe Datenträger möglichst nahe am ersten Teilbereich 21, das heißt am oberen Ende der mobilen Vorrichtung 1, zu positionieren ist, damit die Energieübertragungsrate und/oder die Datenübertragungsrate zwischen dem externen Datenträger und der mobilen Vorrichtung 1 am stabilsten ist.

Fig. 5 zeigt zum Beispiel eine mobile Vorrichtung 1, bei der die Kommunikationsschnittstelle 12, insbesondere das Antennenelement 13, in einem zweiten Teilbereich 22 angeordnet ist, der sich in einem mittleren Teilabschnitt der mobilen Vorrichtung 1 befindet. Dieses Beispiel ist vergleichbar mit dem in der Figur 2 erläuterten Beispiel für die mobile Vorrichtung 1. Über die als Bildschirmanzeige 17 (Display) ausgeführte Ausgabeeinheit 16 der mobilen Vorrichtung 1 kann dem Benutzer der Hinweis mit der Positionierungsinformation so dargeboten werden, dass der Benutzer schnell und intuitiv erkennt, dass der externe Datenträger möglichst nahe am zweiten Teilbereich 22, das heißt am mittleren Teilabschnitt der mobilen Vorrichtung 1, zu positionieren ist, damit die Energieübertragungsrate und/oder die Datenübertragungsrate zwischen dem externen Datenträger und der mobilen Vorrichtung 1 am stabilsten ist.

Fig. 6 zeigt zum Beispiel eine mobile Vorrichtung 1, bei der die Kommunikationsschnittstelle 12, insbesondere das Antennenelement 13, in einem dritten Teilbereich 23 angeordnet ist, der sich an einem unteren Ende der mobilen Vorrichtung 1 befindet. Über die als Bildschirmanzeige 17 (Display) ausgeführte Ausgabeeinheit 16 der mobilen Vorrichtung 1 kann dem Benutzer der Hinweis mit der Positionierungsinformation so dargeboten werden, dass der Benutzer schnell und intuitiv erkennt, dass der externe Datenträger möglichst nahe am dritten Teilbereich 23, das heißt am unteren Ende der mobilen Vorrichtung 1, zu positionieren ist, damit die Energieübertragungsrate und/oder die Datenübertragungsrate zwischen dem externen Datenträger und der mobilen Vorrichtung 1 am stabilsten ist.

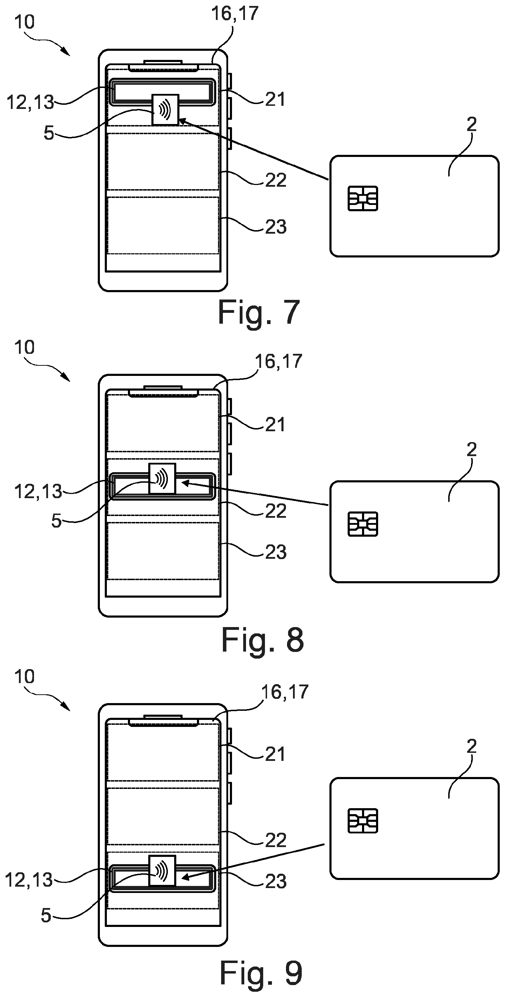

Ähnlich wie bei den 4 bis 6 zeigen die Figuren 7 bis 8 drei verschiedene mobile Vorrichtungen 1, bei denen die Kommunikationsschnittstelle 12, insbesondere das Antennenelement 13, in den unterschiedlichen Teilbereichen 21, 22, 23 der mobilen Vorrichtung 1 angeordnet ist.

Anknüpfend an Fig. 4 zeigt Fig. 7 eine mobile Vorrichtung 1 und einen externen Datenträger 2, der an dem ersten Teilbereich 21 der mobilen Vorrichtung 1 positioniert werden soll. Basierend auf der Positionsinformation bezüglich der Kommunikationsschnittstelle 12, insbesondere des Antennenelements 13, wird der Hinweis für den Benutzer erstellt, welcher die Positionierungsinformation 5 umfasst, die angibt, dass der Benutzer den externen Datenträger 2 am ersten Teilbereich 21 positionieren soll. Die Positionierungsinformation 5 ist hier wieder in Form eines WLAN-Symbols dargestellt, wobei andere Formen oder Erscheinungsbilder der Positionierungsinformation 5 möglich sind. Die Positionierungsinformation 5 wird im oberen Bereich der als Bildschirmanzeige 17 (Display) ausgeführten Ausgabeeinheit 16 angezeigt, das heißt vom Benutzer aus gesehen quasi über dem ersten Teilbereich 21 der mobilen Vorrichtung 1. Somit weiß der Benutzer anhand der im ersten Teilbereich 21 dargestellten Positionierungsinformation 5, dass sich die Kommunikationsschnittstelle 12, insbesondere das Antennenelement 13, im ersten Teilbereich 21 befindet. Der Benutzer kann nun intuitiv den externen Datenträger 2 an den ersten Teilbereich 21 anhalten, um die Stabilität der Energieübertragung und/oder der Datenübertragung zwischen der mobilen Vorrichtung 1 und dem externen Datenträger 2 zu verbessern.

Anknüpfend an Fig. 5 zeigt Fig. 8 eine mobile Vorrichtung 1 und einen externen Datenträger 2, der an dem zweiten Teilbereich 22 der mobilen Vorrichtung 1 positioniert werden soll. Basierend auf der Positionsinformation bezüglich der Kommunikationsschnittstelle 12, insbesondere des Antennenelements 13, wird der Hinweis für den Benutzer erstellt, welcher die Positionierungsinformation 5 umfasst, die angibt, dass der Benutzer den externen Datenträger 2 am zweiten Teilbereich 22 positionieren soll. Die Positionierungsinformation 5 ist hier wieder in Form eines WLAN-Symbols dargestellt, wobei andere Formen oder Erscheinungsbilder der Positionierungsinformation 5 möglich sind. Die Positionierungsinformation 5 wird im mittleren Bereich der als Bildschirmanzeige 17 (Display) ausgeführten Ausgabeeinheit 16 angezeigt, das heißt vom Benutzer aus gesehen quasi über dem zweiten Teilbereich 22 der mobilen Vorrichtung 1. Somit weiß der Benutzer anhand der im zweiten Teilbereich 22 dargestellten Positionierungsinformation 5, dass sich die Kommunikationsschnittstelle 12, insbesondere das Antennenelement 13, im zweiten Teilbereich 22 befindet. Der Benutzer kann nun intuitiv den externen Datenträger 2 an den zweiten Teilbereich 22 anhalten, um die Stabilität der Energieübertragung und/oder der Datenübertragung zwischen der mobilen Vorrichtung 1 und dem externen Datenträger 2 zu verbessern.

Anknüpfend an Fig. 6 zeigt Fig. 9 eine mobile Vorrichtung 1 und einen externen Datenträger 2, der an dem dritten Teilbereich 23 der mobilen Vorrichtung 1 positioniert werden soll. Basierend auf der Positionsinformation bezüglich der Kommunikationsschnittstelle 12, insbesondere des Antennenelements 13, wird der Hinweis für den Benutzer erstellt, welcher die Positionierungsinformation 5 umfasst, die angibt, dass der Benutzer den externen Datenträger 2 am dritten Teilbereich 23 positionieren soll. Die Positionierungsinformation 5 ist hier wieder in Form eines WLAN-Symbols dargestellt, wobei andere Formen oder Erscheinungsbilder der Positionierungsinformation 5 möglich sind. Die Positionierungsinformation 5 wird im unteren Bereich der als Bildschirmanzeige 17 (Display) ausgeführten Ausgabeeinheit 16 angezeigt, das heißt vom Benutzer aus gesehen quasi über dem dritten Teilbereich 23 der mobilen Vorrichtung 1. Somit weiß der Benutzer anhand der im dritten Teilbereich 23 dargestellten Positionierungsinformation 5, dass sich die Kommunikationsschnittstelle 12, insbesondere das Antennenelement 13, im dritten Teilbereich 23 befindet. Der Benutzer kann nun intuitiv den externen Datenträger 2 an den dritten Teilbereich 23 anhalten, um die Stabilität der Energieübertragung und/oder der Datenübertragung zwischen der mobilen Vorrichtung 1 und dem externen Datenträger 2 zu verbessern.

Die Anzeige 17 kann dazu ausgeführt sein, die Positionierungsinformation 5 in Form verschiedenartiger Markierungen in dem jeweiligen Teilbereich 21, 22, 23 der Anzeige 17 für den Benutzer visuell auszugeben. Die Positionierungsinformation 5 kann zum Beispiel in Form eines Erscheinungsbildes des Antennenelements 13, insbesondere einer Leiterbahn oder einer Spule, dargestellt werden. Mit anderen Worten kann die Positionierungsinformation 5 eine Nachbildung bzw. Abbildung des tatsächlichen Antennenelements 13 der mobilen Vorrichtung 1 sein, sodass der Benutzer die Nachbildung bzw. Abbildung des Antennenelements 13 auf der Anzeige 17 so sehen kann, als ob er durch die Anzeige 17 hindurchsieht und das reale Antennenelement 13 wahrnimmt.

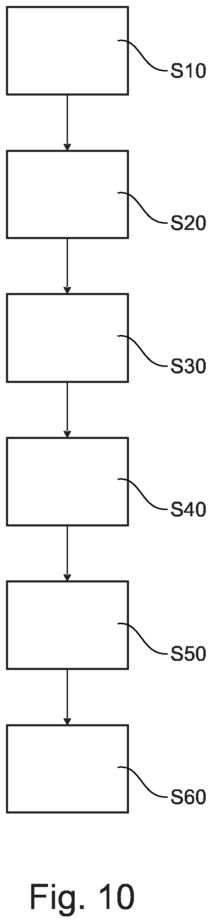

Fig. 10 zeigt ein Flussdiagramm für ein Verfahren zum Ausführen einer Transaktion mittels einer mobilen Vorrichtung 1. Das Verfahren kann zum Beispiel unter Verwendung des in den Figuren 1 und 2 dargestellten Systems 100 implementiert werden. In einem Schritt S10 des Verfahrens erfolgt ein Bereitstellen einer Anwendung, welche dazu konfiguriert ist, auf der mobilen Vorrichtung 1 ausgeführt zu werden. In einem Schritt S20 erfolgt ein Ausführen der Anwendung auf der mobilen Vorrichtung 1. In einem Schritt S30 erfolgt ein Erhalten einer Information bezüglich einer Kommunikationsschnittstelle 12 der mobilen Vorrichtung 1. In einem Schritt S40 erfolgt ein Erzeugen eines Hinweises für einen Benutzer der mobilen Vorrichtung 1 basierend auf der Information bezüglich der Kommunikationsschnittstelle 12 der mobilen Vorrichtung 1, wobei der Hinweis für den Benutzer eine Positionierungsinformation 5 zur Positionierung des externen Datenträgers 2 relativ zur mobilen Vorrichtung 1 umfasst. In einem Schritt S50 erfolgt ein Ausgeben des Hinweises an den Benutzer der mobilen Vorrichtung 1. In einem Schritt S60 erfolgt ein Positionieren des externen Datenträgers 2 relativ zur mobilen Vorrichtung 1 gemäß der Positionierungsinformation 5, um somit die Transaktion auszuführen.

## Patentansprüche

1. Mobile Vorrichtung (1) zum Ausführen einer Transaktion, umfassend:
eine Verarbeitungseinheit (10) zur Ausführung einer Anwendung;
eine Kommunikationsschnittstelle (12) zur Kommunikation (4) mit einem externen Datenträger (2);
wobei die Verarbeitungseinheit (10) bei Ausführung der Anwendung dazu ausgeführt ist, eine Information bezüglich der Kommunikationsschnittstelle (12) der mobilen Vorrichtung (1) zu erhalten;
wobei die Verarbeitungseinheit (10) bei Ausführung der Anwendung dazu ausgeführt ist, einen Hinweis für einen Benutzer der mobilen Vorrichtung (1) basierend auf der Information bezüglich der Kommunikationsschnittstelle (12) der mobilen Vorrichtung (1) zu erzeugen;
wobei der Hinweis für den Benutzer eine Positionierungsinformation (5) zur Positionierung des externen Datenträgers (2) relativ zur mobilen Vorrichtung (1) umfasst.

2. Mobile Vorrichtung (1) nach Anspruch 1,
wobei die Information bezüglich der Kommunikationsschnittstelle (12) der mobilen Vorrichtung (1) eine Positionsinformation bezüglich der Kommunikationsschnittstelle (12) innerhalb der mobilen Vorrichtung (1) aufweist.

3. Mobile Vorrichtung (1) nach einem der vorhergehenden Ansprüche,
wobei die Kommunikationsschnittstelle (12) ein Antennenelement (13) innerhalb der mobilen Vorrichtung (1) umfasst;
wobei die Information bezüglich der Kommunikationsschnittstelle (12) der mobilen Vorrichtung (1) eine Positionsinformation bezüglich des Antennenelements (13) innerhalb der mobilen Vorrichtung (1) aufweist.

4. Mobile Vorrichtung (1) nach einem der vorhergehenden Ansprüche,
wobei die Kommunikationsschnittstelle (12) eine Nahfeld (NFC) - Kommunikationsschnittstelle ist.

5. Mobile Vorrichtung (1) nach einem der vorhergehenden Ansprüche,
wobei die Verarbeitungseinheit (10) dazu ausgeführt ist, die Information bezüglich der Kommunikationsschnittstelle (12) der mobilen Vorrichtung (1) basierend auf einer in der Anwendung enthaltenen oder von der Anwendung abrufbaren Datenbank zu erhalten; und/oder
wobei die Verarbeitungseinheit (10) dazu ausgeführt ist, die Information bezüglich der Kommunikationsschnittstelle (12) der mobilen Vorrichtung (1) von einer externen Datenbank (3) zu erhalten.

6. Mobile Vorrichtung (1) nach einem der vorhergehenden Ansprüche, umfassend:
eine Vielzahl von Teilbereichen (21, 22, 23), die jeweils einen Teilabschnitt der mobilen Vorrichtung (1) definieren;
wobei die Positionierungsinformation (5) einen ersten Teilbereich (21) der Vielzahl von Teilbereichen (21, 22, 23) der mobilen Vorrichtung (1) angibt, an dem die Kommunikationsschnittstelle (12) bei einer Kommunikation (4) mit dem externen Datenträger (2) eine größere Energieübertragungsrate und/oder Datenübertragungsrate aufweist als an einem weiteren Teilbereich (22, 23) der Vielzahl von Teilbereichen (21, 22, 23) der mobilen Vorrichtung (1).

7. Mobile Vorrichtung (1) nach einem der vorhergehenden Ansprüche, umfassend:
eine Ausgabeeinheit (16), welche dazu ausgeführt ist, den Hinweis für den Benutzer der mobilen Vorrichtung (1) auszugeben.

8. Mobile Vorrichtung (1) nach Anspruch 7,
wobei die Ausgabeeinheit (16) eine Anzeige (17) umfasst, welche dazu ausgeführt ist, den Hinweis für den Benutzer visuell auszugeben.

9. Mobile Vorrichtung (1) nach Anspruch 8,
wobei die Anzeige (17) dazu ausgeführt ist, die Positionierungsinformation (5) in Form einer Markierung in einem Teilbereich (21, 22, 23) der Anzeige (17) für den Benutzer visuell auszugeben.

10. Mobile Vorrichtung (1) nach einem der Ansprüche 8 bis 9,
wobei die Positionierungsinformation (5) eine Position und/oder Erstreckung eines Antennenelements (13), insbesondere einer Leiterbahn des Antennenelements (13), innerhalb der mobilen Vorrichtung (1) auf der Anzeige (17) nachbildet.

11. Mobile Vorrichtung (1) nach einem der Ansprüche 8 bis 10, umfassend:
eine Erfassungseinheit (18) zur Erfassung einer Umgebung der mobilen Vorrichtung (1);
wobei die Verarbeitungseinheit (10) bei Ausführung der Anwendung dazu ausgeführt ist, den Hinweis für den Benutzer auf der Anzeige (17) unter Verwendung der durch die Erfassungseinheit (18) erfassten Umgebung der mobilen Vorrichtung (1) zu erzeugen.

12. Mobile Vorrichtung (1) nach einem der Ansprüche 8 bis 11,
wobei die Ausgabeeinheit (16) einen Lautsprecher umfasst, welcher dazu ausgeführt ist, den Hinweis für den Benutzer akustisch auszugeben.

13. System (100) zum Ausführen einer Transaktion, umfassend:
eine mobile Vorrichtung (1) nach einem der vorhergehenden Ansprüche;
einen externen Datenträger (2);
wobei die Verarbeitungseinheit (10) bei Ausführung der Anwendung dazu ausgeführt ist, die Transaktion auszuführen, wenn der externe Datenträger (2) relativ zur mobilen Vorrichtung (1) gemäß der Positionierungsinformation (5) positioniert ist.

14. Verfahren zum Ausführen einer Transaktion mittels einer mobilen Vorrichtung (1), umfassend:
Bereitstellen einer Anwendung, welche dazu konfiguriert ist, auf der mobilen Vorrichtung (1) ausgeführt zu werden (S10);
Ausführen der Anwendung auf der mobilen Vorrichtung (1, S20);
Erhalten einer Information bezüglich einer Kommunikationsschnittstelle (12) der mobilen Vorrichtung (1, S30);
Erzeugen eines Hinweises für einen Benutzer der mobilen Vorrichtung (1) basierend auf der Information bezüglich der Kommunikationsschnittstelle (12) der mobilen Vorrichtung (1), wobei der Hinweis für den Benutzer eine Positionierungsinformation (5) zur Positionierung eines externen Datenträgers (2) relativ zur mobilen Vorrichtung (1) umfasst (S40);
Ausgeben des Hinweises an den Benutzer der mobilen Vorrichtung (1, S50);
Positionieren des externen Datenträgers (2) relativ zur mobilen Vorrichtung (1) gemäß der Positionierungsinformation (5), um somit die Transaktion auszuführen (S60).

15. Anwendung zur Ausführung auf einer mobilen Vorrichtung (1), wobei die Ausführung der Anwendung auf der mobilen Vorrichtung (1) die mobile Vorrichtung (1) veranlasst:
eine Information bezüglich einer Kommunikationsschnittstelle (12) der mobilen Vorrichtung (1) zu erhalten;
einen Hinweis für einen Benutzer der mobilen Vorrichtung (1) basierend auf der Information bezüglich der Kommunikationsschnittstelle (12) der mobilen Vorrichtung (1) zu erzeugen, wobei der Hinweis für den Benutzer eine Positionierungsinformation (5) zur Positionierung eines externen Datenträgers (2) relativ zur mobilen Vorrichtung (1) umfasst.
